# EUROPEAN PATENT SPECIFICATION

(11) **EP 1 038 566 B1**
(45) Date of publication and mention of the grant of the patent: **24.03.2004**
(21) Application number: 00101850.6
(22) Date of filing: 31.01.2000
(51) Int. Cl.: B01D 46/24, B01D 39/20, F01N 3/02

(54) **A particulate filter and a fabrication method thereof**
Partikelfilter und Verfahren zur Herstellung
Filtre à particules et son procédé de fabrication

(30) Priority: 01.02.1999 JP 2409999
(43) Date of publication of application: 27.09.2000
(73) Proprietor: TOYOTA JIDOSHA KABUSHIKI KAISHA, Aichi-ken 471-8571 (JP)
(72) Inventor: Watanabe, Yoshimasa, Toyota-shi, Aichi-ken, 471-8571 (JP); Shiratani, Kazuhiko, Toyota-shi, Aichi-ken, 471-8571 (JP); Henda, Yoshimitsu, Toyota-shi, Aichi-ken, 471-8571 (JP); Yanagihara, Hiromichi, Toyota-shi, Aichi-ken, 471-8571 (JP); Sugiyama, Toshihisa, Toyota-shi, Aichi-ken, 471-8571 (JP)
(74) Representative: Pellmann, Hans-Bernd, Dipl.-Ing.

(56) References cited:
- EP-A- 0 798 452
- EP-A- 0 821 145
- PATENT ABSTRACTS OF JAPAN vol. 1998, no. 06, 30 April 1998 (1998-04-30) & JP 10 037739 A (TOYOTA MOTOR CORP;SUMITOMO ELECTRIC IND LTD), 10 February 1998 (1998-02-10)

## Description

### TECHNICAL FIELD

The present invention relates to a particulate filter for collecting particulate matter in the exhaust gas of an internal combustion engine and a fabrication method for such particulate filters.

### BACKGROUND ART

The exhaust gas of an internal combustion engine, especially in that of a diesel engine, contains particulate matter consisting mainly of carbon particles. In order to prevent the particulate matter from dispersing into the atmosphere, various devices for collecting the particulate matter in exhaust gas have been suggested.

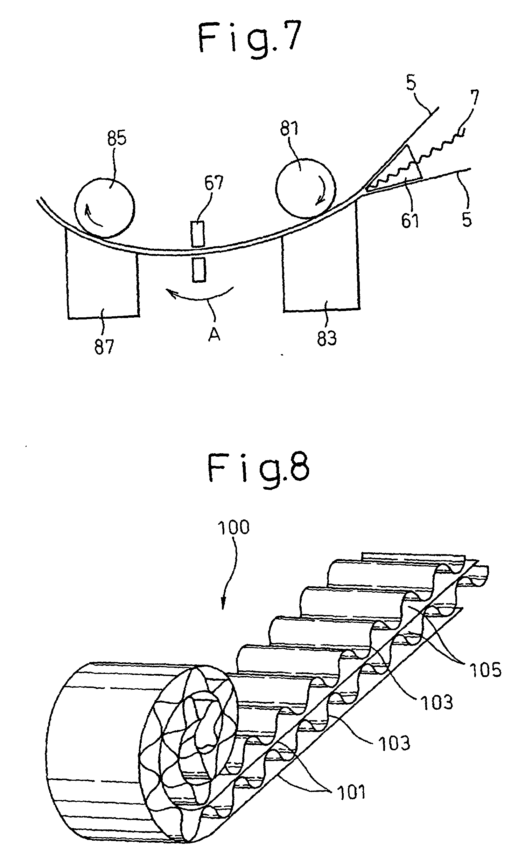

An example of this kind of device is disclosed in Japanese Unexamined Patent Publication (Kokai) No. 9-262414. The '414 publication uses a particulate filter for collecting particulate matter. Fig. 8 schematically illustrates the construction of a filter element 100 of the particulate filter used in the '414 publication. The filter element in the '414 publication is formed by laminating a plurality of planar filter units and winding the laminated filter units around a center axis to form a cylindrical filter element in the shape of a roll. In the '414 publication, each of the planar filter units consists of a plain filter media sheet 101 made of nonwoven metal fabric and a corrugated metal sheet 103 placed one on another. When the filter units are laminated, therefore, the filter media sheets 101 of the respective layers are separated by the corrugated metal sheets 103 and passages in the direction along the ridges of the corrugated metal sheets 103 are formed between the filter media sheets 101. When the laminated bodies of the filter units are wound around the center axis extending in parallel with the ridges of the corrugated metal sheets 103, axial exhaust gas passages 105 are formed in the filter element roll 100. Further, the edges of the filter sheets 101 on both sides of the filter element roll 100 are welded alternately so that the exhaust gas passage 105 closed at one end and the exhaust gas passage 105 closed at the other end are arranged alternately to the radial direction of the filter element roll.

In the '414 publication, a particulate trap is formed by inserting the filter element roll into a cylindrical open-ends outer casing. When the particulate trap in the '414 publication is disposed in the exhaust gas passage of an internal combustion engine, the exhaust gas from the engine flows into the filter element roll from the exhaust gas passages 105 having closed ends at the downstream side of the roll (i.e., the exhaust gas passages having open ends at the upstream side) and, after flowing through the filter media sheets 101 between the exhaust gas passages, flowing into the exhaust gas passages 105 having closed ends at the upstream side of the roll and flows out from the open ends of the exhaust gas passages on the downstream side of the exhaust gas passage 105. Therefore, the particulate matter in the exhaust gas is trapped by the filter media sheets 105 when the exhaust gas passes therethrough. Thus, by using the particulate trap in the '414 publication, particulate matter in the exhaust gas is collected by the trap at a high efficiency while the pressure drop of the trap is kept at a relatively low level.

However, though it has a good filtering capability, the fabrication of the filter element roll used in the '414 publication is extremely difficult.

For example, in the filter element roll in the '414 publication, the edges on the axial ends of the filter media sheets 101 in the respective layers of the filter element roll must be alternately welded to the edges of the axial ends of the filter media sheets in the adjacent layers so that axial exhaust gas passages having closed ends on one side of the roll and axial exhaust gas passages having closed ends on the other side of the roll are alternately disposed in the radial direction of the roll. In this case, the edges of the filter media sheets 101 on one side of the laminated filter body can be welded to form the closed ends of the axial exhaust gas passage before the laminated filter body is wound around the center axis. However, the edges of the filter media sheets on the other side of the laminated filter body cannot be welded until the laminated body is wound around the center axis. In other words, the counterpart edges to which the edges of the filter media on the other side are to be welded are placed in proper positions only after the laminated filter body is formed into the roll. Since the edges of the filter media sheets to be welded together extend in a long spiral line once the roll is formed, it is extremely difficult to perform welding work and inspection of the welded portions. This causes an increase in time and cost for fabricating the filter element roll in Fig. 8. In addition, since the inspection of the welded edges is also difficult to perform, it is difficult to guarantee the quality of the filter element roll in Fig. 8.

### DISCLOSURE OF INVENTION

In view of the problems in the related art as set forth above, the object of the present invention is to provide a particulate filter and its fabrication method which enables a reduction in time and cost required for the fabrication of the particulate filter while improving the quality of the particulate filter.

According to the present invention, there is provided a fabrication method for a particulate filter comprising steps of, placing a pair of filter media sheets one on another while interposing a separation member therebetween in such a manner that the filter media sheets oppose each other and are separated by a predetermined distance, forming a filter unit by adhering the edges of the pair of the filter media sheets to each other at one side thereof so that an exhaust gas passage having a closed end at one side thereof is defined between the filter media sheets, forming a laminated filter unit by laminating a plurality of the filter units in such a manner that the adhered edges of the respective filter units alternately face in opposite directions, and forming a particulate filter by winding the laminated filter units in a roll around an axis in parallel with the filter media sheets and perpendicular to the edges thereof so that an exhaust gas passage having a closed end at one side of the roll and an exhaust gas passage having a closed end at the other side of the roll are alternately arranged in the radial direction of the roll.

Further, according to the present invention, there is provided a particulate filter comprising a plurality of filter units laminated and wound around a center axis in the shape of a roll, characterized in that the respective filter units are formed by a pair of filter media sheets placed one on another while interposing a separation member therebetween to form a predetermined clearance between the filter media sheets, one of the axial end edges of the pair of the filter media sheets are adhered to each other so that an axial exhaust gas passage having a closed end at one of the axial end thereof is formed in the respective filter units, and that the filter units are laminated in such a manner that the closed axial ends of the exhaust gas passages in one filter unit and the closed axial ends of the exhaust gas passages in an adjacent filter unit are disposed on the sides of the roll opposite to each other.

According to the present invention, a plurality of filter units are laminated and the laminated bodies of the filter units are wound around a center axis to form a filter element roll. Each filter unit consists of a pair of filter media sheets and a separation member inserted between the filter media sheets, although the filter unit of the conventional filter element roll consists of one filter media sheet and one corrugated metal sheet placed one upon another. In the present invention, the edges of the pair of the filter media sheets on one side of each filter unit can be adhered to each other before the filter units are laminated and wound around the center axis. After adhering the edges on one side, the filter units are placed one upon another in order to form a laminated body of the filter units. In this case, the filter units are placed one upon another in such a manner that the welded edges of the respective filter units are disposed alternately to face in opposite directions. This laminated body of the filter units is wound around the center axis and a filter element roll is formed. Thus, in the filter element roll in the present invention, the exhaust gas passages having the closed ends formed by the adhered edges on one side of the roll and the exhaust gas passages having the closed ends on the other side of the roll are arranged alternately along the radial direction of the roll, and each exhaust gas passage is separated from the adjacent exhaust gas passages by two filter media sheets.

According to the present invention, since the edges of the filter media sheets can be adhered to each other before the filter element roll is formed, the adhering work of the edges and the inspection thereof after the adhering operation are greatly simplified compared to the conventional fabrication method illustrated in Fig. 8.

### BRIEF DESCRIPTION OF THE DRAWINGS

The present invention will be better understood from the description as set forth hereinafter, with reference to the accompanying drawings in which:
Fig. 1 schematically illustrates the end view of an embodiment of the particulate filter according to the present invention;
Fig. 2 is a sectional view of the particulate filter taken along the line II-II in Fig. 1;
Figs. 3 schematically illustrates the construction of the filter element roll of the particulate filter in Fig. 1;
Fig. 4 schematically illustrates the construction of the filter unit of the particulate filter in Fig. 1;
Fig. 5 illustrates an example of the method for welding the edges of the filter media sheets;
Fig. 6 schematically illustrates a continuous process for fabricating a filter element roll;
Fig. 7 illustrates another example of the method for welding the edges of the filter media sheets; and
Figs. 8 schematically illustrates the construction of a conventional filter element roll.

### DESCRIPTION OF THE PREFERRED EMBODIMENT

Hereinafter, embodiments of the present invention will be explained in detail with reference to the accompanying drawings.

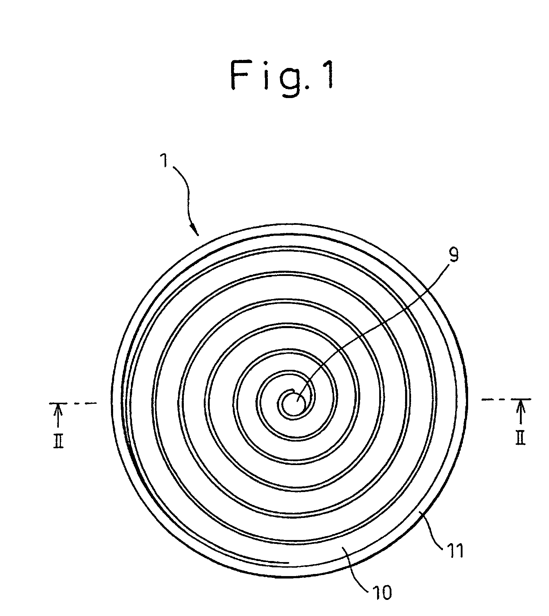

Figs. 1 through 3 illustrate a particulate filter 1 according to an embodiment of the present invention.

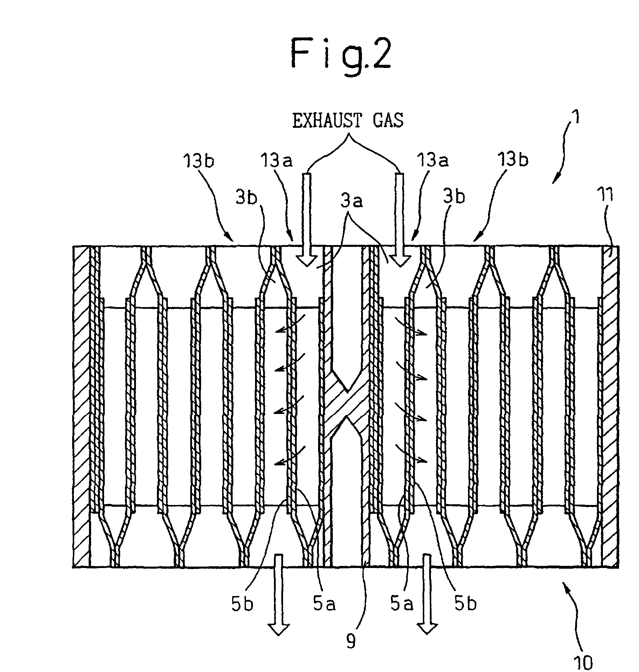

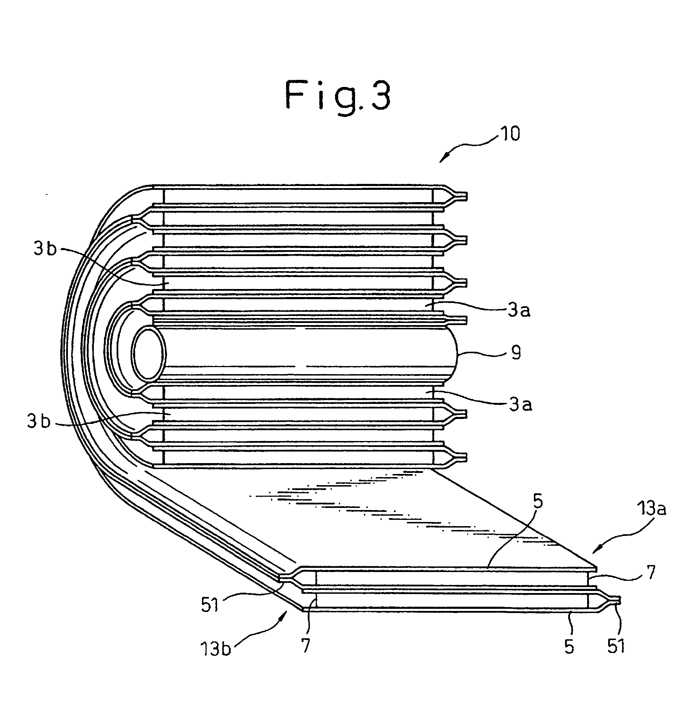

In this embodiment, as shown in Fig. 3, a plurality of filter units (13a, 13b) are placed one on another in order to form a laminated body of the filter units. A filter element roll 10 is formed by winding the laminated body of the filter units around a cylindrical core 9. A particulate filter 1 is formed by inserting the filter element roll 10 into a metal outer casing 11 in the shape of a cylinder having open ends and fixing the filter element roll 10 to the casing as shown in Figs. 1 and 2.

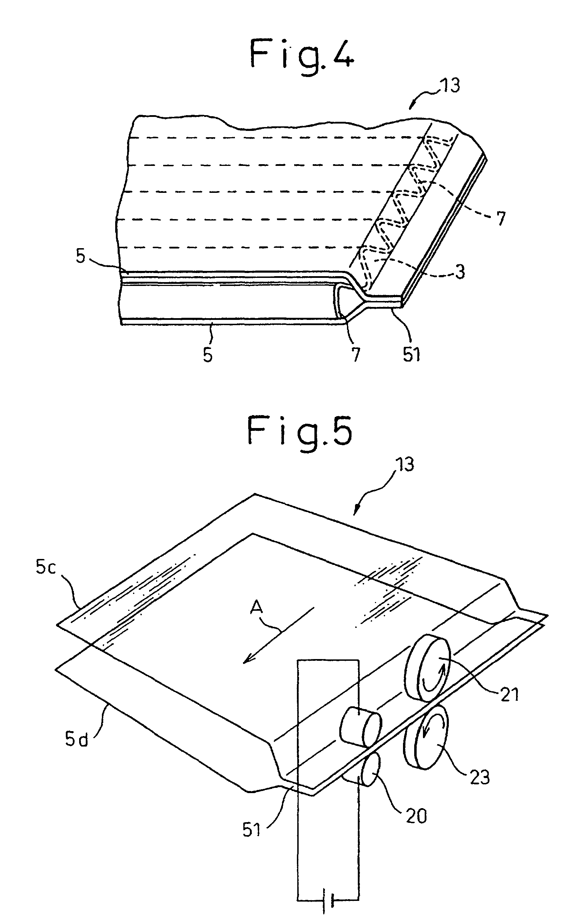

Fig. 4 illustrates the construction of the filter unit 13 according to the present invention. Each filter unit 13 consists of a pair of filter media sheets 5 made of metal nonwoven fabric and a corrugated metal sheet 7 which is interposed between the filter media sheets 5 and acts as a separation member in order to maintain a clearance between the pair of the filter media sheets 5.

The edges of the pair of the filter media sheets 5 are adhered to each other at the portion outside the corrugated metal sheet 7 on one side 51 of the filter unit 13 by, for example, electric seam welding. Thus, the pair of the filter media sheets 5 are held by the corrugated metal sheet 7 with a predetermined clearance therebetween, and thereby, passages 3 extending in the direction along the ridges of the corrugated metal sheet 7 and having closed ends at the side 51 are formed between the pair of the filter media sheets 5.

As illustrated by Fig. 3, a plurality of filter units are placed one upon another (Fig. 3 shows the case where two filter units are used) to form a laminated body of the filter units in such a manner that the closed end 51 of the filter units in one layer faces in the opposite direction to the closed end 51 of the filter units in the adjacent layer. The laminated bodies of the filter units 13 are wound around the cylindrical core 9 to form a filter element roll 10. Therefore, in the filter element roll 10, axial passages 3a having the closed end 51 on one end of the roll and axial passages 3b having the closed end 51 on the other end of the roll are disposed alternately in the radial direction of the roll 10 (Fig. 3). In this case, the respective passages are separated from adjacent passages by two filter media sheets 5.

Although two the filter units 13 are used for forming the filter element roll 10 in Fig. 3, three or more the filter units may be used for forming the filter element roll 10. Further, the laminated filter units may be directly wound without using the core 9.

When the particulate filter 1 is placed in an exhaust gas passage, exhaust gas flows into the particulate filter 1 from the passages having open ends on the upstream side (for example, passages 3a of the filter unit 13a) and flows out from the particulate filter 1 from the passages having open ends on the downstream side (for example, passages 3b of the filter unit 13b) after passing through two filter media sheets 5a and 5b (Fig. 2). Therefore, particulate matter in exhaust gas is collected by two filter media sheets 5a and 5b when the exhaust gas passes therethrough.

In the conventional particulate filter in Fig. 8, the exhaust gas passages in the respective layers are separated by one filter media sheet from the exhaust gas passages in the adjacent layers. In contrast to this, the respective exhaust gas passage is separated by two filter media sheets in the present embodiment. Therefore, the pressure drop when the exhaust gas passes through the particulate filter 1 in this embodiment might become larger compared to that of the conventional particulate filter in Fig. 8.

However, it was found that the actual pressure drop through the particulate filter mainly consists of the pressure drop due to the flow convergence when the exhaust gas flows into the exhaust gas passages from the open ends thereof and by the pressure drop due to the friction when the exhaust gas flows through the exhaust gas passages. Further, it was confirmed by experiment that the pressure drop caused by the exhaust gas passing through the filter media sheet is a relatively small compared to the overall pressure drop of the particulate filter. Thus, even though the number of the filter media sheets is doubled compared to the conventional particulate filter, the increase in the pressure drop of the particulate filter in the present embodiment is relatively small (for example, an increase of 30% at maximum) and does not cause any practical problems.

As can be seen from Fig. 3, by using the filter units 13a and 13b each consisting of a pair of the filter media sheets 5 and a corrugated metal sheet 7, the edge of the filter unit can be welded before winding the filter units in the roll, i.e., the welding work can be done in the state where the edges of the filter units extend in straight lines. Therefore, since it is not necessary, as in the conventional particulate filter, to weld the edges of the filter unit extending in a long spiral line after the roll is formed, the welding work of the edges of the filter is greatly simplified compared to the conventional particulate filter. Further, since the welded edges also can be inspected in the condition where the welded edges extend in straight lines, the accuracy of the inspection increases, and thereby the quality of the filter element 10 can be improved.

Next, the method for welding the edges of the filter media sheets 5 will be explained.

As can be seen from Fig. 4, the edges of the filter media sheet 5 are welded together when the edges are extending in straight lines in this embodiment. Therefore, when the filter units 13 are wound in the roll, stress might be exerted on the edges due to the difference in the radius of curvature of the filter media sheet at the edges. More specifically, after the filter units are wound into the roll, a tensile stress will be exerted on the outer filter media sheet of the filter unit due to its larger radius of curvature and a compression stress will be exerted on the inner filter media sheet of the filter unit due to its smaller radius of curvature. These stresses may cause wrinkles, or in some cases, breakage of the filter media sheets at the welded edge.

In order to prevent this from occurring, the edges of the filter media sheets are welded in the condition where the filter media sheets of the filter unit are prestressed in opposite directions to each other. Fig. 5 schematically illustrates the method for welding the edges of the filter media sheets 13 according to the present embodiment. In Fig. 5, reference numeral 20 designates a pair of electric pressure welding rollers for seam welding and the filter unit 13 is fed to the welding rollers in the direction represented by the arrow A. In this embodiment, the edges of the filter media sheets of the filter unit 13 pass through a pair of stressing rollers 21 and 23 rotating opposite directions to each other. Namely, in Fig. 5, the edge of the upper filter media sheet 5c is fed to the welding roller 20 in the condition where it is stretched by the upper stressing roller 21 and the edge of the lower filter media sheet 5d is fed to the welding roller 20 in the condition where it is contracted by the lower stressing roller 23. Thus, in this embodiment, the edges of the filter media sheets 5c and 5d are welded together in the condition where a tensile stress and a compression stress in the direction along the edges are exerted on the edge of the upper filter media sheet 5c and the edge of the lower filter media sheet 5d, respectively. This causes the upper filter media sheet 5c to contract in the direction along the edge after welding and the lower filter media sheet 5d to extend in the direction along the edge after the welding, and thereby the welded edges of the filter unit bend in an arc in the direction along the edges without exerting any external force. Therefore, if the filter unit 13 is wound into the roll while placing the upper filter media sheet 5c at an inner side and the lower filter media sheet 5d at an outer side, the edges of the filter units are kept in a stress-free condition, i.e., no stress is exerted on the filter media sheets 5a and 5c and wrinkles or breakage of the filter media sheet do not occur even after the filter units are wound into the roll.

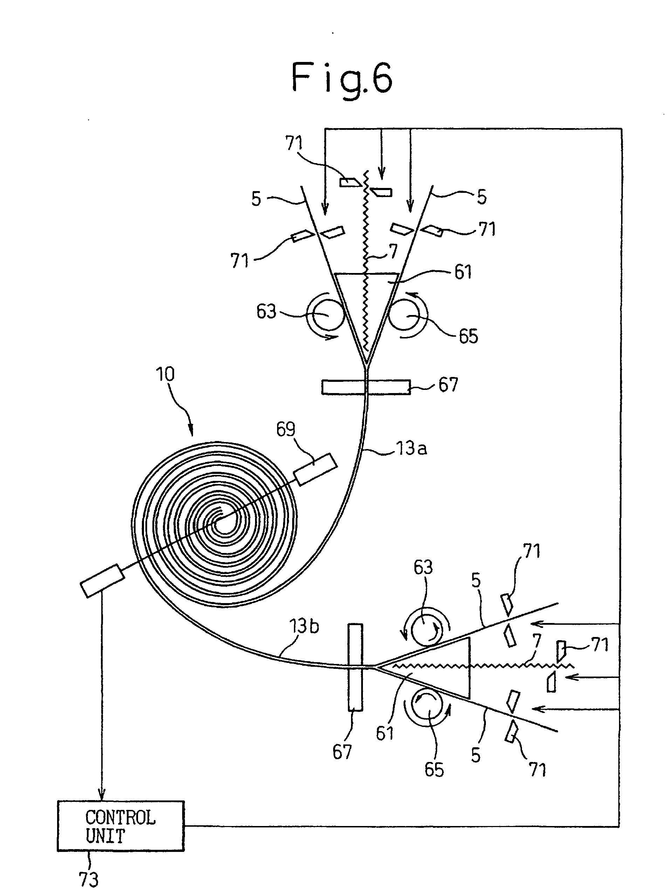

Fig. 6 shows an example of a continuous fabrication process of the filter element roll 10.

In the process shown in Fig. 6, two filter units 13a and 13b are formed simultaneously by welding the edges thereof continuously in the pre-stressed condition as explained in Fig. 5. The portions of the filter units 13a and 13b where the welding of the edges is completed are immediately placed one on another and wound into the roll in order to form a filter element roll 10.

In Fig. 6, filter media sheets 5 and the corrugated metal sheets 7 of the respective filter units 13a and 13b are separately fed to the sliders 61 where the filter media sheets 5 and the corrugated metal sheets 7 are laminated. Further, tension rollers 63 and contraction rollers 65 are disposed on the sliders 61. One of the filter media sheets of each pair is stretched by the tension roller 63 and the other filter media sheet is contracted by the contraction-roller 65 on the slider 61 before the filter units are fed to the welding devices 67 such as welding rollers. Since the filter media sheets of each pair are pre-stressed in opposite directions, the filter units 13a and 13b after the edges thereof are welded tend to form arcs. Therefore, in this embodiment, the portions of the filter units 13a and 13b immediately after passing through the welding devices 67 are placed one upon another and wound into the roll so that a filter element roll 10 is continuously formed. Namely, in this embodiment, the step of forming the filter unit by laminating the filter media sheets and the corrugated metal sheet, the step of welding the edges of the filter units, the step of laminating the filter units and the step of winding the laminated body of the filter units are performed simultaneously and continuously in order to fabricate the filter element roll 10.

Reference numeral 69 in Fig. 6 designates a measuring unit for measuring the diameter of the filter element roll 10 during the fabrication, 71 designates cutting devices for cutting the filter media sheets 5 and the corrugated metal sheets 7 fed to the sliders 61 and 73 designates a control unit of appropriate type for controlling the operation of the cutting devices 71. The control unit 73 in this embodiment monitors the diameter of the filter element roll 10 measured by the measuring unit 69 during the fabrication and activates the cutting devices 71 in order to cut the filter media sheets 5 and the corrugated metal sheets 7 when the diameter of the filter element roll 10 reaches a predetermined value. Thus, the filter element roll 10 having a desired diameter is easily produced.

As explained before, when the edge of the filter unit is welded under the pre-stressed condition explained in Fig. 5, the filter unit naturally curves into an arc after the welding. Therefore, if the welding of the edge of the filter unit and the winding thereof into the roll are performed separately, it is necessary to store and handle the respective filter units in the shape of rolls. Further, the rolls of the filter units must be uncoiled in order to laminate the respective filter units and rewind the laminated body of the filter units during the fabrication of the filter element roll. By performing the continuous fabrication process in Fig. 6, since the portions of the filter units are laminated and wound into the roll immediately after the welding is carried out, it is not necessary to uncoil the rolls of the filter units. Therefore, the fabrication process of the filter element roll is simplified and the time required for fabrication is shortened. Further, since the uncoiling of the filter unit roll sometimes causes breakage of the filter media sheets, it is preferable not to store and handle the filter unit in the roll. Therefore, according to the present invention, breakage of the filter media sheets can be prevented by eliminating the uncoil process of the rolled filter units.

Fig. 7 shows another example of the method for welding the edges of the filter media sheets. In Figs. 5 and 6, the filter media sheets of each filter unit are pre-stressed in opposite directions so that the welded filter unit curves in an arc in a free condition. However, in the method in Fig. 7, the filter unit is bent in an arc before the edge thereof is welded. By welding the edge of the filter unit while holding the filter units in an arc, the welded filter unit also naturally curves in an arc.

In Fig. 7, reference numerals the same as those in Fig. 6 represent similar elements. In Fig. 7, a pair of the filter media sheets 5 and the corrugated metal sheet 7 are fed to the slider 61, and after passing through the slider 61, the edges of the filter media sheets 5 are pressed against arcuate guides 83, 87 by shaping rollers 81, 85 so that the portion of the filter unit between the arcuate guides 83 and 87 curves in an arc. The edge of the filter unit is welded by the welding device 67 while the filter unit is held in the arc. Since the edge of the filter unit is welded while it is held in an arc, the welded filter unit curves in an arc in a free condition. Therefore, when the filter units are laminated and wound into the filter element roll 10, no stress is exerted on the welded edge portions. In this embodiment, the filter units may be laminated and wound immediately and continuously after the edges are welded as explained in Fig. 6.

## Claims

1. A fabrication method for a particulate filter (1) comprising steps of:
placing a pair of filter media sheets (5) one on another, interposing a separation member (7) therebetween in such a manner that the filter media sheets (5) oppose each other and are separated by a predetermined distance;
forming a filter unit (13) by adhering the edges of the pair of the filter media sheets to each other at one side (51) thereof so that an exhaust gas passage (3) having a closed end at one side thereof is defined between the filter media sheets (5);
forming a laminated filter unit by laminating a plurality of said filter units (13) in such a manner that the adhered edges of the respective filter units alternately face in opposite directions; and
forming a particulate filter by winding the laminated filter units in a roll (10) around an axis (9) in parallel with the filter media sheets and perpendicular to the edges thereof so that an exhaust gas passage (3a) having a closed end at one side of the roll (10) and an exhaust gas passage (3b) having a closed end at the other side of the roll (10) are alternately arranged in the radial direction of the roll.

2. A fabrication method for a particulate filter as set forth in claim 1, wherein the step of forming a filter unit by adhering the edges of the pair of the filter media sheets further comprises a step of applying a compression along the edge of one of the pair of the filter media sheets and applying a tension along the edge of the other of the pair of the filter media sheets when two edges are adhered to each other.

3. A fabrication method for a particulate filter as set forth in claim 1, wherein the step for forming a filter unit by adhering the edges of the pair of the filter media sheets further comprises a step for bending the edges of both filter media sheets in the shape of an arc extending in the direction along the edges when the edges of the pair of the filter media sheets are adhered to each other.

4. A fabrication method for a particulate filter as set forth in claim 2 or claim 3, wherein the step for forming a filter unit, the step for forming a laminated filter unit and the step for forming a particulate filter roll are carried out simultaneously by adhering the edges of a plurality of pairs of the filter media sheets continuously from one end of each of the edges toward the other end of each of the edges simultaneously to continuously form a plurality of the filter units and continuously laminating and winding the portions of the filter units where the adhesion of the edges is completed to form a particulate filter roll continuously.

5. A particulate filter comprising a plurality of filter units (13) laminated and wound around a center axis (9) in the shape of a roll (10), whereby the respective filter units (13) are formed by a pair of filter media sheets (5) placed one on another with a separation member (7) interposed therebetween to form a predetermined clearance between the filter media sheets (5), one axial end edge (51) of each pair of filter media sheets (5) are adhered to each other so that an axial exhaust gas passage (3) having a closed end at one of the axial ends thereof is formed in the respective filter units, and whereby the filter units are laminated in such a manner that the closed axial ends of the exhaust gas passages (3a) in one filter unit and the closed axial ends of the exhaust gas passages (3b) in an adjacent filter unit are disposed on the sides of the roll opposite to each other.

## Patentansprüche

1. Herstellungsverfahren für einen Partikelfilter (1) mit den Schritten:
Anordnen eines Paars Filtermediumblätter (5) aufeinander, dazwischen Einfügen eines Trennteils (7) auf eine Weise, dass die Filtermediumblätter (5) einander gegenüber liegen und um einen vorbestimmten Abstand voneinander getrennt sind;
Ausbilden einer Filtereinheit (13) mittels Anfügen der Kanten des Paars Filtermediumblätter aneinander an einer ihrer Seiten (51) davon, so dass ein Abgasdurchtritt (3) zwischen den Filtermediumblättern (5) definiert ist, der an einer Seite davon ein geschlossenes Ende aufweist;
Ausbilden einer laminierten Filtereinheit durch das Laminieren einer Vielzahl von Filtereinheiten (13) auf solch eine Weise, dass die aneinander angefügten Kanten der entsprechenden Filtereinheiten abwechselnd in gegenüberliegende Richtungen gerichtet sind; und
Ausbilden eines Partikelfilters mittels Aufwickeln der laminierten Filtereinheiten auf eine Rolle (10) um eine Achse (9) parallel zu den Filtermediumblättern und rechtwinkelig zu deren Kanten, so dass ein Abgasdurchtritt (3a), der ein geschlossenes Ende an einer Seite der Rolle (10) aufweist, und ein Abgasdurchtritt (3b), der ein geschlossenes Ende an der anderen Seite der Rolle (10) aufweist, abwechselnd in der radialen Richtung der Rolle angeordnet sind.

2. Herstellungsverfahren für einen Partikelfilter gemäß Anspruch 1, wobei der Schritt des Ausbildens einer Filtereinheit mittels aneinander Anfügen des Paars Filtermediumblätter außerdem einen Schritt umfaßt, Druck entlang der Kante von einem Blatt des Paars der Filtermediumblätter anzuwenden, und eine Spannung entlang des anderen Blatts des Paars Filtermediumblätter anzuwenden, wenn zwei Kanten aneinander angefügt werden.

3. Herstellungsverfahren für einen Partikelfilter gemäß Anspruch 1, wobei der Schritt des Ausbildens einer Filtereinheit mittels aneinander Anfügen des Paars Filtermediumblätter außerdem einen Schritt umfaßt, die Kanten beider Filtermediumblätter in Form eines Bogens zu biegen, der sich in der Richtung entlang der Kanten erstreckt, wenn die Kanten des Paars Filtermediumblätter aneinander angefügt werden.

4. Herstellungsverfahren für einen Partikelfilter gemäß Anspruch 2, oder 3, wobei der Schritt zum Ausbilden einer Filtereinheit, der Schritt zum Ausbilden einer laminierten Filtereinheit und der Schritt zum Ausbilden einer Partikelfilterrolle zugleich ausgeführt wird, durch das gleichzeitige aneinander Anfügen der Kanten einer Vielzahl von Paaren Filtermediumblätter fortgesetzt von einem Ende jeder Kante zum andren Ende jeder Kante, um fortgesetzt eine Vielzahl Filtereinheiten auszubilden und durch fortgesetztes Laminieren und Aufwickeln der Abschnitte der Filtereinheiten, bei denen das aneinander Anfügen der Kanten vollendet ist, um fortgesetzt eine Partikelfilterrolle auszubilden.

5. Partikelfilter mit einer Vielzahl von Filtereinheiten (13), die in Form einer Rolle (10) um eine Mittelachse (9) laminiert und gewickelt sind, wobei die entsprechenden Filtereinheiten (13) durch ein Paar Filtermediumblätter (5) mit einem dazwischen eingefügten Trennteil (7) ausgebildet sind, um einen vorbestimmten Zwischenraum zwischen den Filtermediumblättern (5) auszubilden, und eine axiale Endkante (51) jedes Paars Filtermediumblätter (5) aneinander angefügt ist, so dass in den entsprechenden Filtereinheiten ein axialer Abgasdurchtritt ausgebildet wird, der an einem seiner axialen Enden geschlossen ist, und wobei die Filtereinheiten auf solch eine Weise laminiert sind, dass die geschlossenen axialen Enden der Abgasdurchtritte (3a) in einer Filtereinheit und die geschlossenen axialen Enden der Abgasdurchtritte (3b) der angrenzenden Filtereinheit bei den Seiten der Rolle einander gegenüberliegend angeordnet sind.

## Revendications

1. Procédé de fabrication pour un filtre à particules (1) comprenant les étapes consistant à :
placer une paire de feuilles (5) de milieu filtrant l'une sur l'autre, interposer un élément de séparation (7) entre elles de manière telle que les feuilles (5) de milieu filtrant s'opposent l'une à l'autre et sont séparées par une distance prédéterminée ;
former une unité (13) filtrant par mise en adhésion des bords de la paire de feuilles de milieu filtrant l'un à l'autre au niveau d'un côté (51) de celle-ci de sorte qu'un passage (3) de gaz d'échappement comportant une extrémité fermée au niveau d'un côté de celle-ci est défini entre les feuilles (5) de milieu filtrant ;
former une unité filtrant stratifiée en stratifiant une pluralité desdites unités (13) filtrant de manière telle que les bords mis à adhérer des unités filtrant respectives sont en regard de manière alternée dans les directions opposées ; et
former un filtre à particules en enroulant les unités filtrantes stratifiées en un rouleau (10) autour d'un axe (9) en parallèle avec les feuilles (5) de milieu filtrant et perpendiculaire aux bords de celles-ci de sorte qu'un passage (3a) de gaz d'échappement comportant une extrémité fermée au niveau d'un côté du rouleau (10) et qu'un passage (3b) de gaz d'échappement comportant une extrémité fermée au niveau de l'autre côté du rouleau (10) sont agencés de manière alternée dans la direction radiale du rouleau.

2. Procédé de fabrication pour un filtre à particules selon la revendication 1, dans lequel l'étape de formation d'une unité filtrant par mise en adhésion des bords de la paire de feuilles de milieu filtrant comprend, en outre, une étape d'application d'une compression le long du bord d'une feuille de la paire de feuilles de milieu filtrant et d'application d'une tension le long du bord de l'autre feuille de la paire de feuilles de milieu filtrant lorsque les deux bords sont mis à adhérer l'un avec l'autre.

3. Procédé de fabrication pour un filtre à particules selon la revendication 1, dans lequel l'étape de formation d'une unité filtrante par mise en adhésion des bords de la paire de feuilles de milieu filtrant comprend, en outre, une étape destinée à courber les bords des deux feuilles de milieu filtrant en la forme d'un arc s'étendant avec la direction le long des bords lorsque les bords de la paire de feuilles de milieu filtrant sont mis à adhérer l'un avec l'autre.

4. Procédé de fabrication pour un filtre à particules selon la revendication 2 ou 3, dans lequel l'étape de formation d'une unité filtrante, l'étape de formation d'une unité filtrante stratifiée et l'étape destinée à former un rouleau filtrant à particules sont effectuées simultanément par mise en adhésion des bords d'une pluralité de paires de feuilles de milieu filtrant en continu à partir d'une extrémité de chacun des bords vers l'autre extrémité de chacun des bords simultanément pour former en continu une pluralité d'unités filtrant et en stratifiant et en enroulant en continu les parties des unités filtrant où l'adhésion des bords est achevée pour former un rouleau filtrant à particules en continu.

5. Filtre à particules comprenant une pluralité d'unités filtrantes (13) stratifiées et enroulées autour d'un axe (9) central en la forme d'un rouleau (10), moyennant quoi les unités filtrantes (13) respectives sont formées par une paire de feuilles (5) de milieu filtrant placées l'une sur l'autre avec un élément de séparation (7) interposé entre celles-ci pour former un débattement prédéterminé entre les feuilles (5) de milieu filtrant, un bord (51) d'extrémité axiale de chaque paire de feuilles (5) de milieu filtrant sont mis à adhérer l'un avec l'autre de sorte qu'un passage (3) de gaz d'échappement axial comportant une extrémité fermée au niveau d'une de ses extrémités axiales est formée dans les unités filtrant respectives, et moyennant quoi les unités filtrant sont stratifiées de manière telle que les extrémités axiales fermées des passages (3a) de gaz d'échappement dans une unité filtrant et les extrémités axiales fermées des passages (3b) de gaz d'échappement dans une unité filtrant adjacente sont disposées sur les côtés du rouleau opposés les uns aux autres.
